Europäisches Patentamt

European Patent Office

Office européen des brevets

(11) Publication number: 0 519 042 A1

# EUROPEAN PATENT APPLICATION
## published in accordance with Art. 158(3) EPC

(21) Application number: 92902963.5

(22) Date of filing: 08.01.92

(86) International application number:
PCT/ES92/00003

(87) International publication number:
WO 92/12033 (23.07.92 92/19)

(51) Int. Cl.5: B60T 17/20, B60T 7/12,
B60T 11/10

(30) Priority: 09.01.91 ES 9100049

(43) Date of publication of application:
23.12.92 Bulletin 92/52

(84) Designated Contracting States:
AT BE CH DE DK FR GB GR IT LI LU NL SE

(71) Applicant: FAGOR, S.COOP. LTDA.
B. San Andrés, s/n
E-20500 Mondragon (Guipuzcoa)(ES)
Applicant: ESTALA CUADRADO, Alvaro
Pena Goni, 1
E-20002 San Sebastian(ES)
Applicant: AROCENA YARZA, Miguel, Angel
Pena Goni, 1
E-20002 San Sebastian(ES)
Applicant: FERNANDEZ PALOMO, Eduardo
Pena Goni, 1
E-20002 San Sebastian(ES)

(72) Inventor: ESTALA CUADRADO, Alvaro
Pena Goni, 1
E-20002 San Sebastian(ES)
Inventor: AROCENA YARZA, Miguel, Angel
Pena Goni, 1
E-20002 San Sebastian(ES)
Inventor: FERNANDEZ PALOMO, Eduardo
Pena Goni, 1
E-20002 San Sebastian(ES)

(74) Representative: Carpintero Lopez, Francisco
HERRERO & ASOCIADOS, S.L. Alcalá, 21
E-28014 Madrid(ES)

(54) EMERGENCY SYSTEM FOR STOPPING VEHICLES.

(57) The emergency system for stopping vehicles consists in strategically providing a press-button which, in a case of emergency, may be actuated thereby causing the operation of an electric motor (3) and a hydraulic pump (4) which are part of the normal braking circuit (13), so that the complete stopping of the vehicle is achieved without having to step on the conventional brake pedal, either when the driver has a physical or mental problem or when a failure occurs in the normal braking circuit (13).

FIG.-2

## OBJECT OF THE INVENTION

The present invention relates to an emergency system for stopping vehicles such as cars, buses, lorries and so on, whenever their driver suffers some sort of physical or mental problem, such as fainting, inter alia, which may prevent him from stopping the vehicle as he would normally, but nevertheless allowing him to make a quick and simple movement such as pressing a push-button instantaneously, which someone inside the vehicle other than the driver can also do.

## BACKGROUND OF THE INVENTION

In vehicles such as cars, buses, lorries and so on, it is extremely dangerous if when driving the vehicle the driver suffers an unwanted and important alteration of his physical or mental state.

In fact, if the driver should faint, feel dizzy, suffer a sunstroke, a cardiac arrest or a similar ailment the vehicle would be out of control, staying on the road and usually being involved in a serious accident.

In such cases, it has also happened at times that the vehicle driver retains his physical and/or mental fitness to some extent, albeit losing control of his legs, which also means that the danger of an accident is also very high, for he is unable to step on the brake pedal to stop the vehicle, or even on the clutch pedal to reduce to a lower gear.

The statistics available relating to such accidents point to the frequency in which the copilot or whoever is sitting next to the driver realizes what is happening but is wholly unable to do anything about it for though he may grab the wheel he cannot in such a short space of time take the driver from his seat and is hence unable to step on the brake pedal.

British Patent GB-2,109,881 relates to an emergency brake system which is preferably applied to motor vehicles and is preferably operated using compressed air which acts on the appropriate piston to move a cable connected to the brake pedal, which brake system therefore uses the car's brake circuit at all times, without providing a second system, not forming part of the car's normal system.

French Patent FR-2,440,854 focuses on a safety brake for motor cars, preferably designed to be used in driving schools, which comprises a circuit which is not independent of the car's brake system, is rather complicated to instal and is operated by activating a valve inserted in the said circuit which will allow either brake circuit to be actuated.

German Patent DE-3,721,813 relates to an emergency car brake system having a second independent brake circuit, with the control located beyond the driver's reach and control, for it is rather designed to be used by the passengers in an emergency which the driver does not observe.

French Patent FR-2,620,992 relates to a stand-by car brake control system which is activated independently of the car's normal brake system and is used in parking the car or as an emergency brake system, though it cannot be used in the event of the driver losing control of the car, and cannot be activated by anyone other than the driver himself, thus being restrictive, the system acting solely and exclusively on the car's back wheels.

German Patent DE-3,544,965 sets out a brake system combined with the emergency actuation system, both systems being combined in similar circuits, either being operated by controlling an electrically actuated pressure valve. This system cannot be operated by the driver or the copilot in an emergency, but can only be used by the passengers if they observe a danger that the driver cannot see.

German Patent DE-2,801,068 sets out a compressed air brake system only to be used in parking or clamping trailers, but this brake system is not independent of the car's brake system, nor can it be used in an emergency, but solely and exclusively for the aforesaid purpose.

## DESCRIPTION OF THE INVENTION

The subject of this invention is an emergency system which to a large extent solves the aforesaid problems, putting forth a solution that allows the car to be braked from a position other than the driver's and regardless completely of what the latter is doing.

With the system subject hereof, and in a strategic place within the vehicle, preferably within the control panel, an activator is disposed, such as a push-button, duly labelled and lit, when such illumination is so required.

On operating the push-button an electric motor is switched on, which may be the actual car's starter motor, and with the latter a hydraulic pump, which causes the car to brake progressively until it stops completely.

Thus, without the driver having to activate any element, even without the need to remove him from his driver's position, it suffices for someone next to him to press the said button in an emergency in order for the car to stop completely.

It has also been provided that on pressing the emergency button, the engine will stop, tapping the electrical current required for the engine to run to earth, whether the engine use diesel oil, petrol or other fuels. This action, in addition to helping stop the car completely, eliminates any danger of fire.

It has also been provided that when the button is pressed, optical and/or acoustic signal means be activated, for instance lights provided at the front and at the rear of the vehicle, the colour of which lights shall differ from those that are the norm on a vehicle, in order that when other users see them they will immediately realize the sort of problems that are taking place inside the vehicle at issue.

## DESCRIPTION OF THE DRAWINGS

All these characteristics, which shall be appreciated in greater detail hereinafter in the numerical specification, result in the achievement of some improvements which modify the essential nature of the present invention.

In order to provide a fuller understanding of the nature of this invention, the set of drawings attached hereto, while purely illustrative and not fully comprehensive, show a preferred industrial embodiment, to which we shall refer in the description. And in particular:

Figure 1.- Is a diagram showing the electric circuit of the system subject hereof, in a purely illustrative practical embodiment thereof.

Figure 2.- Is a diagram showing the hydraulic circuit of the invention.

Figure 3 and 4.- Are two simpler embodiments of the hydraulic circuit.

In the figure, the reference numbers pertain to the following elements:

1.- Push-button.
2.- Timer.
3.- Electric motor.
4.- Hydraulic pump.
5.- Timers.
6.- Signal lights.
7.- Car engine power supply.
8.- Brake fluid reservoir.
9.- By-pass valve.
10.- Solenoid valve.
11.- Emergency brake circuit.
12.- Solenoid valves.
13.- Conventional brake circuit.
14.- Pedal.
15.- Depression servo-brake.
16.- Depression brake pump.

## PREFERRED EMBODIMENT OF THE INVENTION

The object of the invention is an emergency system designed to stop vehicles such as cars, buses, lorries and so forth in extreme cases such as when the driver faints for reasons such as a sunstroke and a cardiac arrest, inter alia.

With the system subject hereof, and at a strategic location inside the car, for instance the control panel, an operating element is provided which preferably comprises a duly labelled push-button (1) provided with its own lighting means in order that it may be visible at night, when the vehicle is being used and has its own lighting means switched on.

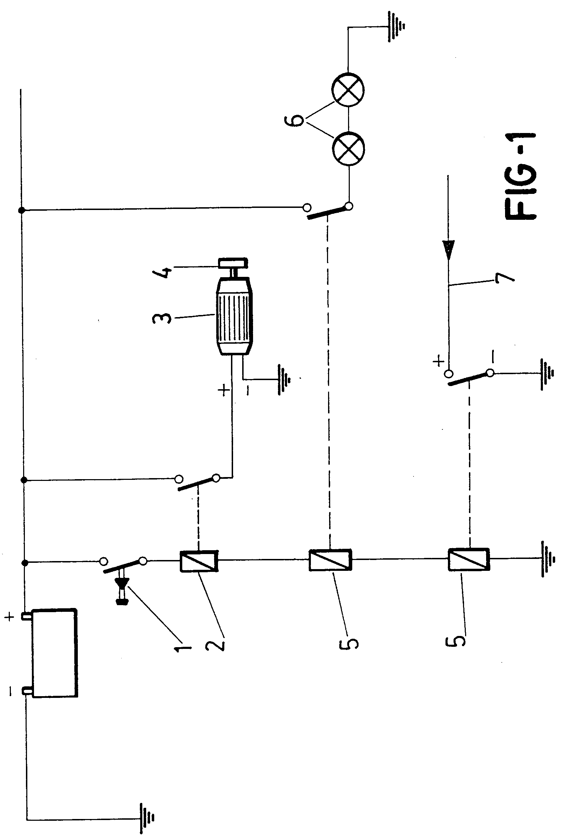

On operating the push-button (1) a timer (2) coil is activated and the contact point opens and closes in succession, causing an electric motor (3) and a hydraulic pump (4) provided with movement by the electric motor (3), see in figure 1, to start and stop in succession. The motor (3) has been designed so that it can be the vehicle starter motor.

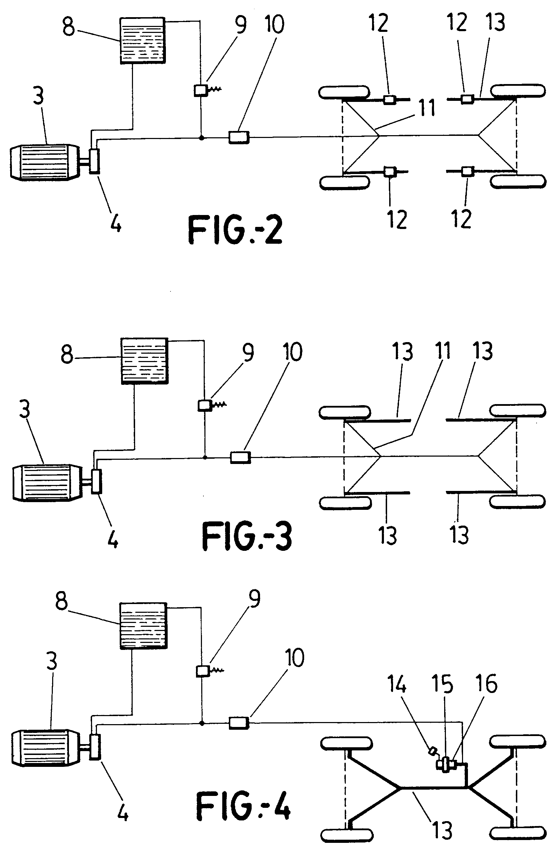

Furthermore, as shown in figure 2, the pump (4) communicates with a brake fluid reservoir (8) and is linked to a solenoid valve (10) which communicates the pump (4) with an emergency brake circuit (11), faintly outlined in figure 2; whilst the normal brake circuit (13) is boldly outlined.

Thus, on operating the push-button (1), in addition to the successive pump (4) strokes, the solenoid valve (10) opens which causes the vehicle to apply the brakes successively through the emergency brake circuit (11).

The number of times the brakes are applied will be a function of the number of times the motor (3) and the pump (4) are started and stopped together, and shall be sufficient to cause the vehicle to stop completely under the most extreme conditions in which it is used.

When the brakes have finally stopped the vehicle completely, the timer (2) shall keep the motor (3) with a continuous power supply such that the pump (4) stays on, keeping the car braked. Pressure shall remain constant in the circuit, and any pressure increase shall be discharged through a by-pass valve (9), which allows any over-pressure to be discharged towards the reservoir (8).

The embodiment shown in figure 2 has been designed with the vehicle's conventional brake circuit, numbered (13), provided with solenoid valves (12) which are closed when the solenoid valve (10) opens, thereby wholly rendering the conventional brake circuit (13) independent of the emergency circuit (11). In such event, the pump (4) could even be provided to turn in one direction and then, after the brakes have been applied, to turn slightly backwards, in order for the auxiliary circuit (11) to be sufficiently depressed so that the brake shoes open after the brakes have been applied.

The following has also been designed to occur, either through the actual timer (2) or through other timers (5) or similar electrical-electronic means:

Making of the power supply circuit to optical and/or acoustic signal elements, such as signal lights (6) disposed at the front and rear of the vehicle. The colour of these lights (6) will be different to that of conventional vehicle lights, in order that when they are switched on other users may be advised that someone inside the car has a health problem.

Furthermore, another consequence of operating the push-button (1) is the earthing of the power supply (7) lead to the vehicle's engine in order that it is automatically switched off thereby to assist in braking the vehicle, and avoiding any risk of fire.

Thus, the system subject hereof would afford the following characteristics:

1.- It can brake the vehicle smoothly by applying the brakes consecutively.

2.- In the event of failure in the vehicle's conventional brake circuit, a second brake system will be available, wholly independent of the first one and working as such.

3.- Power supply to the vehicle's engine will be stopped as will the engine, thereby to prevent a possible fire.

4.- Optical and/or acoustic means are activated, advising other drivers that there is a problem in the vehicle in question, in order that they may call for the appropriate medical assistance.

When the danger is over, it will suffice to operate the push-button (1) again in order for the vehicle to be ready to work again, for the power supply to the motor (3) will stop, the signal lights (6) will be switched off and the earthing of the power supply (7) to the vehicle's engine will be discontinued.

The system has been further designed to operate without having the timer (2), in other words, that on operating the push-button (1) the electric motor (3) will be switched on and will work continuously, driving the hydraulic pump (4), at the same time as the solenoid valves in the normal brake circuit (13) are closed.

The hydraulic pump (4) shall cause the pressure in the emergency circuit (11) to rise to a preset value, without exceeding the same at any time, for the by-pass valve (9) shall be gauged to that pressure and if the latter is exceeded it will be discharged through the appropriate return pipe towards the reservoir (8), as described above.

Thus, the vehicle is braked continuously, at a uniform pressure, until the vehicle finally stops whereupon it is kept at a standstill, for the pump (4) shall continue to send pressure until the push-button (4) is operated again. Thus, the vehicle remains at a total standstill until the push-button (1) is operated again, whereupon the motor (3) and the pump (4) are stopped, at the same time as the pressure in the emergency circuit (11) disappears, for the solenoid valves (12) in the normal brake circuit (11) shall open.

In either case, the solenoid valves (12) close on receiving the power supply when the push-button (1) is depressed, and stay open when they have no power supply; while the solenoid valve (10) is located in the emergency circuit (11) it has the opposite function, that is to say, it stays closed also when it receives no voltage and opens when it does receive some.

Thus, when the vehicle works normally, the valves (12) are open and the valves (10) are closed.

In an emergency, if the push-button (1) is operated, the valve (10) shall open to allow the emergency circuit to pass and the valves (12) shall close preventing the pressure in the emergency circuit (11) from being lost through the normal brake circuit (13). Therefore, these valves may be replaced by any other element that may fulfil this function and thus the solenoid valve (10) may be replaced by a check valve, a non-return valve, which only allows the fluid to pass in the emergency circuit (11) in the direction of the pump (4) towards the brake shoes, preventing return in the opposite direction.

Furthermore, in either case, both when the timer (2) is provided, which causes the emergency system to work applying the brakes several times, and when it is not provided, so that the brakes are applied continuously, the operation of the system is the same allowing the vehicle to stop completely in an emergency by merely pressing the push-button (1).

Noteworthy also is the fact that since the emergency brake circuit (11) is provided in both cases and it is wholly independent of the normal brake circuit, through the solenoid valves (12), the vehicle is fitted with a double independent brake system, so that in the event of the conventional circuit (13) failing, even in the event of total pressure loss therein, the vehicle may be stopped using the emergency circuit (11).

Figure 3 shows another embodiment of the system's hydraulic circuit, as in figure 2, though simpler since no solenoid valves (12) are provided.

Furthermore, figure 5 illustrates yet another embodiment where the hydraulic circuit in the emergency brake system is directly connected to the conventional brake circuit (13), which is provided with the appropriate pedal (14), depression servo-brake (15) and brake pump (16).

In this case, the system works exactly as described above, with the only exception that it is in this case lacking a second brake circuit in the event of the conventional brake circuit failing, since both circuits converge.

After describing the nature of the present invention and the industrial embodiments thereof in sufficient depth it only remains to be said that it can as a whole and its constituent parts be changed as to shape, material and arrangement without going beyond the scope of the invention, insofar as the fundamentals thereof are not altered.

This invention is being applied for in Spain for twenty years as an absolute novelty and the applicant reserves the right, in accordance with the International Industrial Property Conventions, to extend this application to countries abroad, if possible claiming the same priority as herein.

The applicant also reserves the right to apply for the appropriate Additions, as provided for by Law, when providing this invention with as many improvements as may be derived therefrom.

## Claims

1. Emergency vehicle stop system, such as for cars, buses, lorries, designed to stop the same in the event of their driver suffering a physical or mental problem, essentially characterized in comprising an auxiliary or supplementary circuit operating the vehicle's brake system, which circuit is not part of the particular brake system and which is activated by means of a push-button (1) located strategically within the reach of the driver and, as appropriate, his accompaniment, such that operation of the said push-button (1) switches on the electric motor (3) of the hydraulic pump (4) driving the fluid in the auxiliary or supplementary circuit (11) which is independent of the normal brake circuit (13) through the valves (10) and/or (12).

2. Emergency vehicle stop system, fully as in claim one, characterized in that the pump (4) communicates with a brake fluid reservoir (8) into which any possible over-pressure in the emergency circuit (11) is discharged through a valve (9) selectively gauged at a pre-set pressure.

3. Emergency vehicle stop system, fully as in claim one, characterized in that the system has been designed to incorporate optical and/or acoustic signal devices, such as lights (6) of a colour which differs from traditional vehicle signal lights, the lights (6) being switched on upon operating the push-button (1).

4. Emergency vehicle stop system, fully as in claim one, characterized in that the power supply (7) to the vehicle's engine has been designed to be tapped to earth upon operating the push-button (1).

FIG -1

EP 0 519 042 A1

FIG.-2

FIG.-3

FIG.-4

# INTERNATIONAL SEARCH REPORT

International Application No PCT/ES 92/00003

| I. CLASSIFICATION OF SUBJECT MATTER (if several classification symbols apply, indicate all) |
|---|

According to International Patent Classification (IPC) or to both National Classification and IPC

Int. Cl.$^5$　　B 60 T 17/20　　B 60 T 7/12　　B 60 T 11/10

| II. FIELDS SEARCHED |
|---|

**Minimum Documentation Searched [7]**

| Classification System | Classification Symbols |
|---|---|
| Int. Cl.$^5$ | B 60 T |

Documentation Searched other than Minimum Documentation
to the Extent that such Documents are Included in the Fields Searched [8]

| III. DOCUMENTS CONSIDERED TO BE RELEVANT [9] | | |
|---|---|---|
| Category [*] | Citation of Document, [11] with indication, where appropriate, of the relevant passages [12] | Relevant to Claim No. [13] |
| A | DE,A,3721813 (VOGEL) 19 January 1989, see the whole document (cited in the application) | 1,3,4 |
| A | FR,A,2440854 (LEFORT Y MARGUERES) 6 June 1980, see page 2, lines 4-31; figures 1,2 (cited in the application) | 1,2 |
| A | FR,A,1573391 (ROCKWELL) 4 July 1969, see figure, page 3, lines 33-43; page 2, lines 23-32 | 1,2 |
| A | EP,A,0230213 (AUTOSTOP) 29 July 1987, see abstract; figure 1 | 1,2 |
| A | EP,A,0165889 (TRADING) 27 December 1985, see figures 1-3,7; abstract; page 3, lines 3-10 | 1 |
| A | LU,A, 87195 (LENTZ) 17 November 1988, see page 2, lines 18-22; page 3, lines 1-12 | 1 |

./.

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

| IV. CERTIFICATION | |
|---|---|
| Date of the Actual Completion of the International Search | Date of Mailing of this International Search Report |
| 22 May 1992 (22.05.92) | 30 June 1992 (30.06.92) |
| International Searching Authority | Signature of Authorized Officer |
| EUROPEAN PATENT OFFICE | |

Form PCT/ISA/210 (second sheet) (January 1985)

| III. DOCUMENTS CONSIDERED TO BE RELEVANT (CONTINUED FROM THE SECOND SHEET) | | |
|---|---|---|
| Category * | Citation of Document, with indication, where appropriate, of the relevant passages | Relevant to Claim No |
| A | US,A,3451501 (APPLEGATE) 24 June 1969 | 1 |
| A | US,A,4934492 (HAYES-SHEEN) 19 June 1990 | |